# EUROPEAN PATENT APPLICATION

(11) **EP 4 704 180 A1**
(43) Date of publication of application: **04.03.2026**
(21) Application number: 24795530.5
(22) Date of filing: 05.02.2024
(51) Int. Cl.: H01M 4/485, H01M 4/62, H01M 10/42, H01M 4/139

(54) **COMPOSITE SODIUM-SUPPLEMENT AGENT, AND POSITIVE ELECTRODE SHEET AND PREPARATION METHOD THEREFOR, AND ELECTRIC DEVICE**

(30) Priority: 28.04.2023 CN 202310482926
(71) Applicant: Xiamen Hithium Energy Storage Technology Co., Ltd., Xiamen, Fujian 361100 (CN)
(72) Inventor: WEN, Jiaqi, Xiamen, Fujian 361100 (CN); ZHANG, Guodong, Xiamen, Fujian 361100 (CN); KE, Mengjing, Xiamen, Fujian 361100 (CN); GONG, Linhui, Xiamen, Fujian 361100 (CN)
(74) Representative: RGTH
(86) International application number: PCT/CN2024/076093
(87) International publication number: WO 2024/222141

(57) **Abstract**

The present application relates to the technical field of energy storage apparatuses, in particular to a sodium-supplement agent, and a positive electrode sheet and preparation method therefor, and an electricity-consumption device. The composite sodium-supplement agent is located on a positive electrode sheet of a sodium-ion energy storage apparatus, and the composite sodium-supplement agent comprises: a first sodium-supplement agent and a second sodium-supplement agent, wherein the first sodium-supplement agent has a first oxidation potential, and the second sodium-supplement agent has a second oxidation potential, the first oxidation potential being smaller than 3.9 V, and the second oxidation potential ranging from 3.9 V to 4.4 V. The composite sodium-supplement agent is disposed on the positive electrode sheet, and therefore the advantages, such as realizing simple operation and processing, reducing treatment procedures and involving no harsh processing conditions, are achieved, and industrial application can be implement. In addition, the composite sodium-supplement agent has a relatively comprehensive sodium supplement function, and can form a certain gradient of oxidation potential, thereby achieving the effect of gradient sodium supplementation. Full-stage sodium supplementation can be performed on a sodium-ion energy storage apparatus from an initial formation stage to a subsequent cyclic charging/discharging stage, such that the electrochemical performance of the sodium-ion energy storage apparatus is improved throughout the whole process from formation to cyclic charging/discharging.

## Description

### CROSS-REFERENCE TO RELATED APPLICATIONS

The present disclosure claims priority to Chinese Patent Application No. 2023104829268, filed on April 28, 2023, entitled "Composite Sodium-Supplement Agent, Positive Electrode Sheet and Preparation Method Therefor, and Electric Device", the entire contents of which are incorporated herein by reference for all purposes.

### TECHNICAL FIELD

The present disclosure relates to the technical field of energy storage devices, and particularly to a composite sodium-supplement agent, a positive electrode sheet, a preparation method therefor, and an electricity-consumption device.

### BACKGROUND

Due to the issue of sodium loss in the positive electrode sheet of sodium-ion energy storage devices, the lost sodium can be partially supplemented through sodium supplementation technology. However, current sodium supplementation technologies either face difficulties in industrial application or have relatively single sodium supplementation function. It is challenging for sodium-ion energy storage devices to achieve sodium supplementation throughout all stages, from the initial formation stage to subsequent charge-discharge cycles, thereby making it difficult to improve the electrochemical performance of sodium-ion energy storage devices throughout the entire process from formation to charge-discharge cycles.

### SUMMARY

The embodiments of the present disclosure disclose a composite sodium supplement agent, a positive electrode sheet, a preparation method therefor, and an electricity-consumption device. The composite sodium supplement agent can be industrially applied and enables gradient sodium supplementation, achieving sodium supplementation throughout all stages from the initial formation stage to subsequent charge-discharge cycles. It can improve the electrochemical performance of sodium-ion energy storage devices throughout the entire process from formation to charge-discharge cycles.

To achieve the above objective, in a first aspect, the present disclosure discloses a composite sodium supplement agent. The composite sodium supplement agent is disposed on the positive electrode sheet of a sodium-ion energy storage device and includes a first sodium supplement agent and a second sodium supplement agent. The first sodium supplement agent has a first oxidation potential, and the second sodium supplement agent has a second oxidation potential. The first oxidation potential is less than 3.9V, and the second oxidation potential ranges from 3.9V to 4.4V.

In a second aspect, the present disclosure discloses a positive electrode sheet for a sodium-ion energy storage device, where the working voltage of the sodium-ion energy storage device ranges from 1.5V to 4.1V, and the positive electrode sheet includes the composite sodium supplement agent as described in the first aspect.

In a third aspect, the present disclosure discloses a preparation method for the positive electrode sheet according to the second aspect, wherein the preparation method includes the following steps:
Providing a positive electrode current collector;
Coating a mixture of the second sodium supplement agent, a positive electrode active material, a second conductive agent, a second binder and a second solvent onto the positive electrode current collector and drying to obtain a positive electrode active material layer;
Processing a mixture of the first sodium supplement agent, a first conductive agent, a second binder and a first solvent onto the surface of the positive electrode active material layer to obtain a sodium supplement layer.

As an optional implementation, in the embodiments of the present disclosure, in the step of processing the mixture of the first sodium supplement agent, the first conductive agent, and the first solvent onto the surface of the positive electrode active material layer, and drying to obtain the sodium supplement layer, electrostatic spraying or electrostatic spinning is used for processing.

In a fourth aspect, The present disclosure also discloses an electricity-consumption device, wherein the electricity-consumption device includes an electricity-consumption device body and a sodium-ion energy storage device disposed within the electricity-consumption device body, the sodium-ion energy storage device includes the positive electrode sheet according to the second aspect, and the sodium-ion energy storage device is configured to supply power to the electricity-consumption device body.

Compared with the prior art, the beneficial effects of the present disclosure are as follows:
The composite sodium supplement agent provided by the embodiments of the present disclosure forms a certain oxidation potential gradient through the first sodium supplement agent and the second sodium supplement agent with different oxidation potentials, thereby achieving a gradient sodium supplementation effect for sodium-ion energy storage devices. Moreover, since the composite sodium supplement agent is disposed on the positive electrode sheet of the sodium-ion energy storage device, it has advantages such as easy operation and processing, reduced processing steps, and no stringent processing conditions, making it suitable for industrial application. Specifically, the first oxidation potential of the first sodium supplement agent is less than or equal to 3.9V, and the second oxidation potential of the second sodium supplement agent ranges from 3.9V to 4.4V.

During the initial formation stage (referring to the first charging of the sodium-ion energy storage device after high-temperature aging to activate the battery, during which an SEI film (Solid Electrolyte Interphase) is formed on the surface of the negative electrode sheet), the charging voltage of the sodium-ion energy storage device is relatively low, generally not exceeding 3.9V, and the SOC (State of Charge) is within 60%. The first sodium supplement agent has a lower first oxidation potential of less than 3.9V, enabling it to perform sodium supplementation before the second sodium supplement agent, thereby Supplement for the sodium loss caused by SEI film formation during the formation stage and improving the first charge-discharge efficiency of the sodium-ion energy storage device. In the subsequent charge-discharge cycles of the sodium-ion energy storage device, the oxidation potential is relatively high. The second sodium supplement agent, with a second oxidation potential of 3.9V to 4.4V, can supplement the sodium loss during the charge-discharge cycles due to its higher oxidation potential, thereby enhancing the cycling performance of sodium-ions. Thus, from the initial formation stage to the subsequent charge-discharge cycles, the sodium-ion energy storage device can achieve sodium supplementation throughout all stages, improving the electrochemical performance of the sodium-ion energy storage device over the entire process from formation to charge-discharge cycles.

### BRIEF DESCRIPTION OF THE DRAWINGS

To more clearly illustrate the technical solutions in the embodiments of the present disclosure, the following briefly introduces the accompanying drawings required for the embodiments. Obviously, the accompanying drawings in the following description are only some embodiments of the present disclosure. For those of ordinary skill in the art, other drawings can be obtained from these accompanying drawings without creative effort.
Figure 1 is a schematic structural diagram of a positive electrode sheet disclosed in an embodiment of the present disclosure;
Figure 2 is a schematic structural diagram of another positive electrode sheet disclosed in an embodiment of the present disclosure;

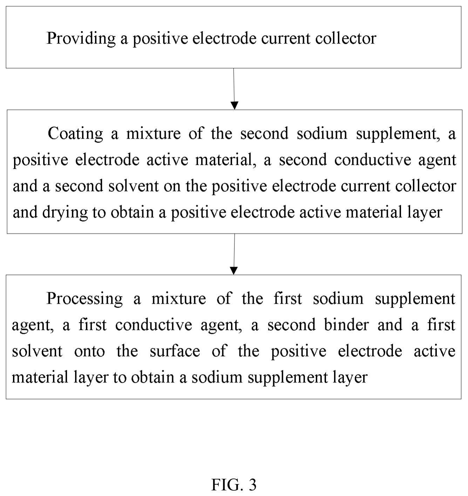

Figure 3 is a flowchart of a preparation method for the positive electrode sheet disclosed in an embodiment of the present disclosure.

### Reference numerals:

100 - Positive electrode sheet;
1 - Positive electrode current collector;
2 - Positive electrode active material layer;
3 - Sodium supplement layer.

### DETAILED DESCRIPTION

The following will clearly and completely describe the technical solutions in the embodiments of the present disclosure with reference to the accompanying drawings. Obviously, the described embodiments are only a part of the embodiments of the present disclosure, rather than all of them. Based on the embodiments of the present disclosure, all other embodiments obtained by those of ordinary skill in the art without creative effort shall fall within the protection scope of the present disclosure.

In the present disclosure, terms such as "upper," "lower," "left," "right," "front," "rear," "top," "bottom," "inner," "outer," "middle," "vertical," "horizontal," "lateral," and "longitudinal" indicate orientations or positional relationships based on the orientations or positional relationships shown in the accompanying drawings. These terms are primarily used to better describe the present disclosure and its embodiments and are not intended to limit the indicated devices, components, or parts to specific orientations or to be constructed and operated in specific orientations.

Moreover, some of the above terms may also be used to indicate other meanings besides orientations or positional relationships. For example, the term "upper" may in some cases be used to indicate a certain dependency or connection relationship. Those of ordinary skill in the art can understand the specific meanings of these terms in the present disclosure based on the context.

Additionally, terms such as "install," "set," "provided with," "connect," and "connected" should be interpreted broadly. For example, they may refer to fixed connections, detachable connections, or integral construction; they may refer to mechanical connections or electrical connections; they may refer to direct connections or indirect connections through an intermediary, or internal communication between two devices, components, or parts. Those of ordinary skill in the art can understand the specific meanings of the above terms in the present disclosure based on the context.

Furthermore, terms such as "first," "second," and the like., are primarily used to distinguish different devices, components, or parts (which may or may not be of the same type or construction) and are not intended to indicate or imply the relative importance or quantity of the indicated devices, components, or parts. Unless otherwise specified, "a plurality of' means two or more.

The following will further explain the technical solutions of the present disclosure with reference to the embodiments and accompanying drawings.

Due to the issue of sodium loss in the positive electrode sheet of sodium-ion energy storage devices, sodium supplementation technology can be employed to partially supplement the lost sodium. However, some existing sodium supplementation technologies fail to balance cost, environmental friendliness, safety, and stability, making industrial application difficult. Specifically, physical pre-sodiation is simple and convenient to operate but poses challenges in ensuring safety; electrochemical pre-sodiation can form a stable SEI film, yet involves cumbersome and complex processes; chemical pre-sodiation also enables the formation of a uniform and dense SEI film, but requires controlled atmosphere conditions and involves expensive solvents. Applying sodium supplement agents on the separator increases the processing steps for the separator and raises operational difficulties. Some sodium supplementation techniques serve a single function, making it difficult for sodium-ion energy storage devices to achieve comprehensive sodium supplementation throughout the entire cycle-from the initial formation stage to subsequent cycling charge-discharge stages. Consequently, it is challenging to enhance the electrochemical performance of the device across the entire process from the formation stage to the cycling charge-discharge phase.

In response to the aforementioned issues in existing sodium supplementation technologies, the present disclosure proposes the following technical solution.

In the first aspect, the present disclosure provides a composite sodium supplement agent, which is located on the positive electrode sheet of a sodium-ion energy storage device. The composite sodium supplement agent includes a first sodium supplement agent and a second sodium supplement agent. The first sodium supplement agent has a first oxidation potential, and the second sodium supplement agent has a second oxidation potential. The first oxidation potential is less than 3.9V, and the second oxidation potential ranges from 3.9V to 4.4V. Directly setting the composite sodium supplement agent on the positive electrode sheet is simple to operate, does not require setting special reaction conditions or using expensive solvents, has no harsh processing conditions, can reduce processing steps, and can be applied industrially. Using the composite sodium supplement agent can make up for the disadvantage of single function of the existing sodium supplementation technologies. Specifically, the composite sodium supplement agent has a certain oxidation potential gradient, can achieve gradient sodium supplementation when the sodium-ion energy storage device works, enables sodium supplementation in all stages from the initial formation stage to the subsequent charge-discharge cycles, and can improve the electrochemical performance of the sodium-ion energy storage device in the entire charge-discharge process.

It can be understood that the first sodium supplement agent and the second sodium supplement agent (like the positive electrode active material) themselves have an oxidation potential range. When the working voltage of the sodium-ion energy storage device reaches the oxidation potential range of the first sodium supplement agent and the second sodium supplement agent, the first sodium supplement agent and the second sodium supplement agent will undergo an oxidation reaction, releasing sodium-ions and electrons, and the released sodium-ions serve as the sodium supplement agent.

In some embodiments, the working voltage of the sodium-ion energy storage device ranges from 1.5V to 4.1V. The charging voltage in the initial formation stage of the sodium-ion energy storage device is low, generally not higher than 3.9V. The first sodium supplement agent has a lower first oxidation potential of less than 3.9V, can undergo an oxidation reaction in the initial formation stage, can perform sodium supplementation by oxidizing and releasing sodium-ions before the second sodium supplement agent, thereby can make up for the sodium loss caused by SEI film formation in the formation stage, and can improve the first charge-discharge efficiency of the sodium-ion energy storage device.

The working potential in the subsequent cycling stage of the sodium-ion energy storage device is high, generally higher than 3.9V. The second sodium supplement agent with a second oxidation potential of 3.9V to 4.4V is set, can undergo an oxidation reaction to release sodium-ions in the cycling stage, can supplement the sodium loss in the cycling process, thereby can improve the cycling performance of sodium-ions. The second sodium supplement agent can also achieve sodium supplementation by increasing the cutoff voltage of the sodium-ion energy storage device in the cycling stage, that is, increasing the cutoff voltage at the required time period to perform sodium supplementation, and an intermittent sodium supplementation effect can be achieved. Thereby, the sodium-ion energy storage device can achieve sodium supplementation in all stages from the initial formation stage to the subsequent charge-discharge cycles, thereby the entire process from the formation stage to the charge-discharge cycles can improve the electrochemical performance of the sodium-ion energy storage device.

If the first oxidation potential of the first sodium supplement agent exceeds 3.9V, it does not meet the working potential range of the initial formation stage of the sodium-ion energy storage device, cannot achieve oxidative decomposition and sodium supplementation in the initial formation stage, and a large amount of the first sodium supplement agent will remain on the surface of the positive electrode sheet, leading to an increase in the impedance of the positive electrode sheet and affecting the electrochemical performance of the sodium-ion energy storage device. If the second oxidation potential of the second sodium supplement agent exceeds 4.4V, it does not meet the working voltage of the sodium-ion energy storage device in the cycling stage, cannot achieve sodium supplementation in the cycling stage; if the second oxidation potential is lower than 3.9V, the second sodium supplement agent is consumed in the reaction during the initial formation stage and also cannot achieve sodium supplementation in the cycling stage, failing to fulfill the role of gradient sodium supplementation.

In some embodiments, the working voltage of the sodium-ion energy storage device ranges from 1.5V to 4.1V. If the working voltage is lower than 1.5V, the positive electrode active material on the positive electrode sheet cannot undergo redox reactions, and the sodium-ion battery cannot function normally. If the working voltage is higher than 4.1V, the electrolyte in the sodium-ion energy storage device may decompose under high voltage, and the structure of the positive electrode sheet may also be damaged under high voltage, affecting the cycle life.

For example, the first oxidation potential may be any point value within the range of less than or equal to 3.9V, including but not limited to: 0.2V, 0.5V, 0.7V, 1V, 1.2V, 1.5V, 1.7V, 2V, 2.1V, 2.2V, 2.3V, 2.4V, 2.5V, 2.6V, 2.7V, 2.8V, 2.9V, 3V, 3.1V, 3.2V, 3.3V, 3.4V, 3.5V, 3.6V, 3.7V, 3.8V, 3.9V, and the like. The second oxidation potential may be any point value within the range of 3.9V to 4.4V, including but not limited to: 3.9V, 3.92V, 3.94V, 3.96V, 3.98V, 4.0V, 4.02V, 4.04V, 4.06V, 4.08V, 4.1V, 4.12V, 4.14V, 4.16V, 4.18V, 4.2V, 4.22V, 4.24V, 4.26V, 4.28V, 4.3V, 4.32V, 4.34V, 4.36V, 4.38V, 4.4V, and the like. The working voltage of the sodium-ion energy storage device may be any point value within the above range, for example, 1.5V, 2V, 2.5V, 3V, 3.5V, 4.0V, 4.1V, and the like.

Preferably, in some embodiments, the first oxidation potential is less than or equal to 3.8V, and/or the second oxidation potential ranges from 3.9V to 4.1V, and/or the state of charge (SOC) of the sodium-ion energy storage device is less than or equal to 60%, which can better match the working voltages of the sodium-ion energy storage device in the initial formation stage and subsequent cycling stages. During the formation stage, the voltage of the sodium-ion energy storage device first rises rapidly to a peak and then gradually decreases to reach equilibrium. During the cycling stage, the voltage of the sodium-ion energy storage device is also in constant dynamic variation. Using the preferred ranges of the first and second oxidation potentials can better match the dynamically changing voltage windows of the formation and cycling stages of the sodium-ion energy storage device. The first and second sodium supplement agents can more accurately undergo oxidative reactions in stages, thereby releasing sodium-ions and electrons for gradient sodium supplementation. The second sodium supplement agent can more precisely cooperate with the dynamically changing voltage to achieve intermittent sodium supplementation. It can be understood that the SOC (State of Charge) of the sodium-ion energy storage device refers to the proportion of available charge in the energy storage device, i.e., the ratio between the stored charge and the rated capacity of the energy storage device. The voltages at different stages of the sodium-ion energy storage device are matched with the SOC. Keeping the SOC of the sodium-ion energy storage device less than or equal to 60% ensures that the first and second sodium supplement agents can better perform their roles in gradient sodium supplementation and full-stage sodium supplementation.

The materials for the first and second sodium supplement agents mainly include the following types of sodium compounds: organic sodium salts, organic sodium salt mixtures, inorganic sodium salts, metallic sodium salts, sodium oxides, and the like. Organic sodium salts all have poor conductivity; inorganic sodium salts are highly toxic and explosive; metallic sodium salts have low capacity release efficiency; sodium oxides are difficult to effectively coordinate with other sodium compounds.

In some embodiments, the first sodium supplement agent includes one or a mixture of NaNiO₂, NaCrO₂, Na₂MnO₂, NaFeO₂, NaₓFe_{(1-y)}Al_{y}O₂, NaₓFe_{(1-y)}Ti_{y}O₂ (0.8≤x≤2, y≥0), and/or the second sodium supplement agent includes one or a mixture of Na₂O₂, Na₂O, Na₃P, Na₂C₂O₂, Na₂C₂O₄. Selecting NaₓFe_{(1-y)}Al_{y}O₂, NaₓFe_{(1-y)}Ti_{y}O₂ (0.8≤x≤2, y≥0) as the first sodium supplement agent does not produce gas and can reduce the accumulation of impurity by-products, thereby not deteriorating electrochemical performance. The selected first sodium supplement agent has a lower first oxidation potential and can serve as a sodium supplement agent during the formation stage, Supplement for sodium loss during SEI film formation and improving the first charge-discharge efficiency of the sodium-ion energy storage device. The second sodium supplement agent has high sodium content and high sodium supplementation efficiency, with a higher oxidation potential that can compensate for sodium loss during cycling, improving cycling performance. Moreover, the second sodium supplement agent does not produce gas during sodium-ion operation.

In some embodiments, the molar ratio of the first sodium supplement agent to the second sodium supplement agent is (2-5):1. The amount of the first sodium supplement agent added is mainly determined by the formation loss of the sodium-ion energy storage device, while the amount of the second sodium supplement agent added is mainly determined by the cycling target. Below this molar ratio range, the amount of the second sodium supplement agent added is excessive, while the amount of the first sodium supplement agent added is insufficient. Excessive second sodium supplement agent reduces the content of other active materials in the positive electrode sheet, lowers energy density, increases polarization of the energy storage device, and accelerates cycling decay; insufficient first sodium supplement agent fails to achieve the goal of improving capacity and first charge-discharge efficiency. Above this molar ratio range, the amount of the first sodium supplement agent added is excessive, while the amount of the second sodium supplement agent added is insufficient. Excessive first sodium supplement agent increases the impedance of the sodium-ion energy storage device, accumulates large amounts of by-products, and deteriorates cell performance; insufficient second sodium supplement agent results in inadequate sodium supply, failing to achieve the goal of improving cycling performance.

For example, the molar ratio of the first sodium supplement agent to the second sodium supplement agent can be any ratio within the above range, including but not limited to 2:1, 2.2:1, 2.4:1, 2.6:1, 2.8:1, 3:1, 3.2:1, 3.4:1, 3.6:1, 3.8:1, 4:1, 4.2:1, 4.4:1, 4.6:1, 4.8:1, 5:1, and the like.

Preferably, the ratio of the first sodium supplement agent to the second sodium supplement agent is controlled within the range of (2~3):1, which can provide sufficient sodium sources for the cycling stage and achieve better cycling capacity retention of the sodium-ion energy storage device.

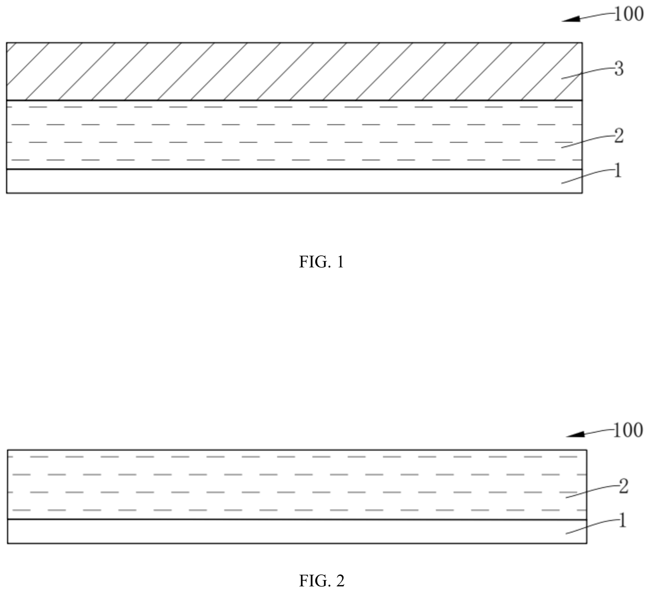

In the second aspect, the present disclosure provides a positive electrode sheet for a sodium-ion energy storage device, which includes the composite sodium supplement agent according to the first aspect. By disposing the first sodium supplement agent and the second sodium supplement agent on the positive electrode sheet, direct sodium supplementation can be achieved for the positive electrode sheet. This is highly compatible with the manufacturing process of positive electrode sheets for sodium-ion energy storage devices, features a simple process, has low environmental requirements, and its total cost depends on the material costs of the first sodium supplement agent and the second sodium supplement agent themselves. The amount can be determined based on the formation loss of the sodium-ion energy storage device and the cycling target to control the degree of sodium supplementation. The operation is simple and safe, and factors such as cost, environmental friendliness, safety, and stability can be taken into account, thereby enabling industrial application. The first sodium supplement agent and the second sodium supplement agent specifically have the following arrangement methods including but not limited to:
Please refer to Figure 1. In some embodiments, the positive electrode sheet includes a positive electrode current collector, and a positive electrode active material layer and a sodium supplement layer sequentially disposed on the positive electrode current collector. The positive electrode active material layer includes the second sodium supplement agent, and the sodium supplement layer includes the first sodium supplement agent. The first sodium supplement agent and the second sodium supplement agent of The present disclosure have the following arrangement methods that can achieve gradient sodium supplementation:
First Arrangement Method:
The positive electrode active material layer 2 includes the second sodium supplement agent but does not include the first sodium supplement agent, and the sodium supplement layer 3 includes the first sodium supplement agent but does not include the second sodium supplement agent.

In some embodiments, please continue to refer to Figure 1. The positive electrode sheet 100 includes a positive electrode current collector 1, and a positive electrode active material layer 2 and a sodium supplement layer 3 sequentially disposed on the positive electrode current collector 1. The sodium supplement layer 3 includes the first sodium supplement agent and the second sodium supplement agent. It should be noted that in this arrangement, the positive electrode active material layer 2 does not contain the first sodium supplement agent or the second sodium supplement agent.

Further, in some embodiments, please refer to Figure 2. The positive electrode sheet 100 consists of a positive electrode current collector 1 and a positive electrode active material layer 2 disposed on the positive electrode current collector 1. The positive electrode active material layer 2 includes the first sodium supplement agent and the second sodium supplement agent.

Preferably, the first arrangement method is adopted, i.e., the positive electrode sheet 100 includes a positive electrode current collector 1, and a positive electrode active material layer 2 and a sodium supplement layer 3 sequentially stacked on the positive electrode current collector 1. The positive electrode active material layer 2 contains only the second sodium supplement agent, and the sodium supplement layer 3 contains only the first sodium supplement agent. Thus, the sodium supplement layer 3 is directly formed on the positive electrode active material layer 2, with the first sodium supplement agent and the second sodium supplement agent disposed in different layers. The sodium supplement layer 3 is closer to the negative electrode side, allowing the sodium source generated by the first sodium supplement agent to move most quickly to the negative electrode side to supplement the sodium consumed in SEI film formation. The first sodium supplement agent is continuously consumed through redox reactions, causing the sodium supplement layer 3 to be gradually depleted during the formation stage. By the cycling stage, the sodium supplement layer 3 can be completely consumed and will not cover the surface of the positive electrode active material layer 2 to increase polarization, thereby avoiding impact on the cycling stage.

In some embodiments, the sodium supplement layer further includes a first conductive agent and a first solvent, wherein the mass ratio of the first sodium supplement agent, the first conductive agent, and the first solvent is 80:(10-15):150. Below this mass ratio, the amount of the first sodium supplement agent is too low, and after the first sodium supplement agent is decomposed, the residual first binder and first conductive agent on the surface are too high, which is not conducive to improving the energy density of the sodium-ion energy storage device. At the same time, it will cause the content of non-active materials on the surface of the positive electrode active material layer to be too high, increasing the polarization on the surface of the positive electrode sheet. Above this mass ratio, the amount of the first sodium supplement agent is too high, and the proportion of the first binder is relatively low, which may easily cause the sodium supplement layer to shed. The sodium supplement layer further includes a first binder, and the mass ratio of the first sodium supplement agent, the first conductive agent, the first binder, and the first solvent is 80:(10-15):(5-10):150.

For example, the mass ratio of the first sodium supplement agent, first conductive agent, first binder, and first solvent may be any ratio within the above range, including but not limited to: 80:10:10:150, 80:11:9:150, 80:12:8:150, 80:13:7:150, 80:14:6:150, 80:15:5:150, and the like.

In some embodiments, the positive electrode active material layer further includes positive electrode active material, second conductive agent, and second solvent, wherein the mass ratio of the second sodium supplement agent to positive electrode active material is (1-5): 100. Below this ratio, the second sodium supplement agent is insufficient to effectively supplement sodium during the cycling stage. Above this ratio, excessive second sodium supplement agent increases the resistance of the positive electrode sheet, reduces sodium-ion kinetics, increases polarization, and adversely affects cell performance. The positive electrode active material layer also includes a second binder.

For example, the mass ratio of the second sodium supplement agent to positive electrode active material may be any value within the above range, including but not limited to: 1:100, 2:100, 3:100, 4:100, 5:100, and the like.

The positive electrode active material may be transition metal oxides/layered oxides, such as: NaₓMO₂ (M=Co, Fe, Mn, Ni or mixtures therefor), e.g., NaNi_{1/3}Fe_{1/3}Mn_{1/3}O₂, or Prussian Blue Analogues, such as: NaₓMA[MB(CN)₆]·zH₂O (MA and MB are transition metal ions), polyanionic materials, amorphous materials, and the like.

The first binder is a mixture of one or more of styrene-butadiene rubber, polyvinylidene fluoride, polytetrafluoroethylene, polyvinyl alcohol, polyacrylonitrile, polyacrylic acid, polyacrylate, carboxymethyl cellulose, sodium alginate, and the like. And/or, the first conductive agent is a mixture of one or more of acetylene black, Super-P (conductive carbon black), CNTs (carbon nanotubes), carbon fiber, graphene, and the like. And/or, the second binder is a mixture of one or more of styrene-butadiene rubber, PVDF (polyvinylidene fluoride), polytetrafluoroethylene, polyvinyl alcohol, polyacrylonitrile, polyacrylic acid, polyacrylate, carboxymethyl cellulose, sodium alginate, and the like. And/or, the second conductive agent is a mixture of one or more of acetylene black, Super-P, carbon nanotubes, carbon fiber, graphene, and the like. And/or, the first solvent and second solvent may be NMP (N-methylpyrrolidone).

In the third aspect, the present disclosure provides a preparation method for the positive electrode sheet according to the second aspect. The preparation method includes the following steps:
Providing a positive electrode current collector;
Forming a film layer containing a composite sodium supplement agent on the positive electrode current collector to form the positive electrode sheet.

The positive electrode current collector may be aluminum foil made from metallic aluminum.

In some embodiments, the step of forming a film layer containing the composite sodium supplement agent on the positive electrode current collector to form the positive electrode sheet is:
Coating a mixture of the second sodium supplement agent, positive electrode active material, second conductive agent, second binder and second solvent onto the positive electrode current collector and drying to obtain a positive electrode active material layer;
Processing a mixture of the first sodium supplement agent, first conductive agent, second binder and first solvent onto the surface of the positive electrode active material layer to obtain a sodium supplement layer.

In the step of preparing the sodium supplement layer, electrostatic spraying or electrostatic spinning is used to prepare the sodium supplement layer. Preferably, electrostatic spinning technology may be used to prepare the sodium supplement layer. The electrospun nanofibers used as the substrate of the sodium supplement layer have the characteristics of large specific surface area and high porosity. This enables more uniform distribution of micro/nano particles of the first sodium supplement agent, first conductive agent and second binder, prevents agglomeration of micro/nano particles, facilitates sodium extraction from the first sodium supplement agent, improves the sodium supplementation efficiency per unit volume or mass of the first sodium supplement agent, enables the sodium supplement layer to supplement more sodium, and thereby improves the capacity and first charge-discharge efficiency of the sodium-ion energy storage device.

In the fourth aspect, the present disclosure also provides an electricity-consumption device, which includes an electricity-consumption device body and the sodium-ion energy storage device according to the fourth aspect disposed in the electricity-consumption device body. The sodium-ion energy storage device is configured to supply power to the device body. The electricity-consumption device body includes a device positive electrode and a device negative electrode. The positive electrode sheet of the secondary energy storage device is electrically connected to the device positive electrode, and the negative electrode sheet is electrically connected to the device negative electrode. The electricity-consumption device includes grid-scale large energy storage systems, UPS uninterruptible power supply equipment, energy storage base stations, electricity-consumption vehicles, and the like.

The following will further explain and illustrate the technical solution of the present disclosure in combination with specific Examples and experimental data.

### Example 1

This example provides a sodium-ion energy storage device, which is a sodium-ion battery.

The sodium-ion battery includes a positive electrode sheet, a negative electrode sheet, an electrolyte, and a separator, wherein the separator is disposed between the positive electrode sheet and the negative electrode sheet.

The positive electrode sheet includes a current collector, a positive electrode active material layer sequentially stacked on the current collector, and a sodium supplement layer. The sodium supplement layer includes NaNiO2 as a first sodium supplement agent, PVDF as a first binder, Super P and CNTs as a first conductive agent, and NMP as a first solvent, with a mass ratio of the first sodium supplement agent, the first binder, the first conductive agent, and the first solvent being 80:10:10:150.

The positive electrode active material layer includes Na₂O₂ as a second sodium supplement agent, NaNi_{1/3}Fe_{1/3}Mn_{1/3}O₂ as a positive electrode active material, PVDF as a second binder, Super P and CNTs as a second conductive agent, and NMP as a second solvent, with a mass ratio of the second sodium supplement agent, the positive electrode active material, the second binder, the second conductive agent, and the second solvent being 1:100:2.66:2.66:71.

The molar ratio of the first sodium supplement agent to the second sodium supplement agent is 3:1.

This example also provides a preparation method for the positive electrode sheet, which includes:
Providing a positive electrode current collector, wherein the positive electrode current collector is an aluminum foil;
Mixing 1 part of the second sodium supplement agent Na₂O₂, 100 parts of the positive electrode active material NaNi_{1/3}Fe_{1/3}Mn_{1/3}O₂, 2.66 parts of the second conductive agent (Super P and CNTs), 2.66 parts of the second binder PVDF, and 71 parts of the second solvent NMP, coating the mixture onto the positive electrode current collector aluminum foil, and drying it to obtain the positive electrode active material layer; and
Mixing 3 parts of the first sodium supplement agent NaNiO₂, 0.375 parts of the first conductive agent (Super P and CNTs), 0.375 parts of the first binder PVDF, and 5.625 parts of the first solvent NMP, and electrostatic spraying the mixture onto the surface of the positive electrode active material layer to obtain the sodium supplement layer.

This example also provides a preparation method for the sodium-ion battery, which includes:
Preparing the positive electrode sheet with the sodium supplement layer as described above;
Preparing the negative electrode sheet of the sodium-ion battery: mixing 95 parts of hard carbon, 2.5 parts of Super P, 2.5 parts of CMC (carboxymethyl cellulose) and SBR (styrene-butadiene rubber), and 80 parts of deionized water uniformly, coating the mixture onto the negative electrode current collector copper foil, and drying it to obtain a dried negative electrode sheet.

Assembling the sodium-ion battery: Using the prepared positive electrode sheet with the sodium supplement layer as the cathode, the negative electrode sheet as the anode, porous glass fiber as the separator, and 1 mol/L NaPF₆ (sodium hexafluorophosphate) (ethylene carbonate (EC): propylene carbonate (PC): dimethyl carbonate (DMC) = 1:1:1, with 5% fluoroethylene carbonate (FEC)) as the electrolyte, a coin-type sodium-ion battery is assembled in an argon glove box with oxygen and water content below 0.1 ppm.

### Example 2

The difference between Example 2 and Example 1 is that in Example 2, the molar ratio of the first sodium supplement agent to the second sodium supplement agent is 2:1.

### Example 3

The difference between Example 3 and Example 1 is that in Example 3, the molar ratio of the first sodium supplement agent to the second sodium supplement agent is 4:1.

### Example 4

The difference between Example 4 and Example 1 is that in Example 4, the molar ratio of the first sodium supplement agent to the second sodium supplement agent is 5:1.

### Example 5

The difference between Example 5 and Example 1 is that in Example 5, the mass ratio of the second sodium supplement agent to the positive electrode active material is 2:100.

### Example 6

The difference between Example 6 and Example 1 is that in Example 6, the mass ratio of the second sodium supplement agent to the positive electrode active material is 3:100.

### Example 7

The difference between Example 7 and Example 1 is that in Example 7, the mass ratio of the second sodium supplement agent to the positive electrode active material is 4:100.

### Example 8

The difference between Example 8 and Example 1 is that in Example 8, the mass ratio of the second sodium supplement agent to the positive electrode active material is 5:100.

### Example 9

The difference between Example 9 and Example 1 is that in Example 9, the sodium supplement layer is prepared by electrospinning.

### Example 10

The difference between Example 10 and Example 1 is that in Example 10, the first sodium supplement agent is NaCrO₂.

### Example 11

The difference between Example 11 and Example 1 is that in Example 11, the first sodium supplement agent is NaFeO₂.

### Example 12

The difference between Example 12 and Example 1 is that in Example 12, the second sodium supplement agent is Na₂C₂O₄.

### Example 13

The difference between Example 13 and Example 1 is that in Example 13, the sodium supplement layer is not provided, and both the first sodium supplement agent and the second sodium supplement agent are mixed into the positive electrode active material layer.

### Example 14

The difference between Example 14 and Example 1 is that in Example 14, both the first sodium supplement agent and the second sodium supplement agent are mixed into the sodium supplement layer.

### Comparative Example 1

The difference between Comparative Example 1 and Example 1 is that in Comparative Example 1, neither the first sodium supplement agent nor the second sodium supplement agent is provided.

### Comparative Example 2

The difference between Comparative Example 2 and Example 1 is that in Comparative Example 2, the second sodium supplement agent is not provided.

### Comparative Example 3

The difference between Comparative Example 3 and Example 1 is that in Comparative Example 3, the first sodium supplement agent is not provided.

### Comparative Example 4

The difference between Comparative Example 4 and Example 1 is that in Comparative Example 4, the first sodium supplement agent is Na₂O₂, and the second sodium supplement agent is NaNiO₂.

**Table 1: Relevant Data of Examples and Comparative Examples**

| | Sodium Supplement Layer First Sodium Supplement Agent | Positive Active Material Layer Second Sodium Supplement Agent | Molar Ratio of First to Second Sodium Supplement Agent | Mass Ratio of Second Sodium Supplement Agent to Active Material | Preparation Method for Sodium Compensation Layer |
|---|---|---|---|---|---|
| Example 1 | NaNiO₂ | Na₂O₂ | 3:1 | 1:100 | Spraying |
| Example 2 | NaNiO₂ | Na₂O₂ | 2:1 | 1:100 | Spraying |
| Example 3 | NaNiO₂ | Na₂O₂ | 4:1 | 1:100 | Spraying |
| Example 4 | NaNiO₂ | Na₂O₂ | 5:1 | 1:100 | Spraying |
| Example 5 | NaNiO₂ | Na₂O₂ | 3:1 | 2:100 | Spraying |
| Example 6 | NaNiO₂ | Na₂O₂ | 3:1 | 3:100 | Spraying |
| Example 7 | NaNiO₂ | Na₂O₂ | 3:1 | 4:100 | Spraying |
| Example 8 | NaNiO₂ | Na₂O₂ | 3:1 | 5:100 | Spraying |
| Example 9 | NaNiO₂ | Na₂O₂ | 3:1 | 1:100 | Electrospinning |
| Example 10 | NaCrO₂ | Na₂O₂ | 3:1 | 1:100 | Spraying |
| Example 11 | NaFeO₂ | Na₂O₂ | 3:1 | 1:100 | Spraying |
| Example 12 | NaNiO₂ | Na₂C₂O₄ | 3:1 | 1:100 | Spraying |
| Example 13 | NaNiO₂ | Na₂O₂ | 3:1 | 1:100 | Located in the Positive Electrode Active Material Layer |
| Example 14 | NaNiO₂ | Na₂O₂ | 3:1 | 1:100 | Located in the Sodium Compensation Layer |
| Comparative Example 1 | Absence of Sodium Supplementation | | | | / |
| Comparative Example 2 | NaNiO₂ | / | 4:0 | 0:100 | Spraying |
| Comparative Example 3 | / | Na₂O₂ | 0:1 | 1:100 | / |
| Comparative Example 4 | NaNiO₂ | NaNiO₂ | 3:1 | 1:100 | Spraying |

### Electrochemical Performance Testing

The sodium-ion batteries in the above Examples and Comparative Examples were subjected to electrochemical performance testing. The sodium-ion batteries were tested for constant-current charge-discharge in an energy storage device measurement apparatus, with a test voltage range of 4.0 V to 1.5 V (vs. Na/Na⁺). Cyclic voltammetry tests were conducted on a battery tester, with a test voltage range of 4.0 V to 1.5 V (vs. Na/Na⁺). The test results are as follows:

**Table 2: Electrochemical Performance Test Results of Examples and Comparative Examples**

| | First-cycle Discharge Capacity (mAh/g) | Initial Charge-Discharge Efficiency | Capacity Retention after 500 Cycles |
|---|---|---|---|
| Example 1 | 128.9 | 98.2% | 95.4% |
| Example 2 | 127.2 | 97.5% | 94.8% |
| Example 3 | 129.2 | 98.5% | 93.5% |
| Example 4 | 129.5 | 99.0% | 91.7% |
| Example 5 | 128.1 | 98.5% | 96.0% |
| Example 6 | 129.2 | 98.1% | 93.5% |
| Example 7 | 127.9 | 98.2% | 92.0% |
| Example 8 | 127.0 | 98.9% | 91.2% |
| Example 9 | 129.5 | 99.3% | 96.4% |
| Example 10 | 129.5 | 99.2% | 95.0% |
| Example 11 | 128.6 | 98.5% | 94.7% |
| Example 12 | 128.0 | 98.1% | 88.2% |
| Example 13 | 127.5 | 96.2% | 88.2% |
| Example 14 | 128.0 | 97.7% | 87.8% |
| Comparative Example 1 | 125.6 | 88.4% | 82.5% |
| Comparative Example 2 | 128.1 | 98.0% | 86.0% |
| Comparative Example 3 | 125.4 | 88.8% | 88.0% |
| Comparative Example 4 | 124.6 | 88.2% | 85.7% |

From the data in Table 1 and Table 2, it can be observed that the first-cycle discharge capacity, initial charge-discharge efficiency, and capacity retention rate of Examples 1 to 14 are all higher than those of Comparative Example 1 (where neither the first nor the second sodium supplement agent was provided). This demonstrates that the inclusion of both the first and second sodium supplement agents in the positive electrode sheet significantly enhances the electrochemical performance of the sodium-ion battery.

Furthermore, when comparing Example 1 with Comparative Example 2, where the second sodium supplement agent was not included in the positive electrode active material layer, Example 1 exhibited a capacity retention rate of 95.4% after 500 cycles, whereas Comparative Example 2 showed a capacity retention rate of 86%-a nearly 10% decrease in capacity retention during cycling. This demonstrates that the second sodium supplement agent effectively enables gradient sodium supplementation during cycling, thereby improving the cycle capacity retention of the sodium-ion battery.

Additionally, when comparing Example 1 with Comparative Example 3, where neither the sodium supplement layer nor the first sodium supplement agent was provided, Example 1 demonstrated a first-cycle discharge capacity of 128.9 mAh/g, an initial charge-discharge efficiency of 98.2%, and a capacity retention rate of 95.4% after 500 cycles. In contrast, Comparative Example 3 exhibited a reduced first-cycle discharge capacity of 125.4 mAh/g (a decrease of 3.5 mAh/g), an initial charge-discharge efficiency dropping to 88.8% (a decrease of 9.4%), and a capacity retention rate of 88.0% after 500 cycles (a decrease of 7.4%). These results clearly show that the absence of the first sodium supplement agent negatively impacts sodium supplementation during the initial charge-discharge formation stage and further degrades the electrochemical performance in subsequent cycling stages.

Compared with Comparative Example 4, the first sodium supplement agent of Example 1 is the second sodium supplement agent of Comparative Example 4, and the second sodium supplement agent of Example 1 is the first sodium supplement agent of Comparative Example 4; that is, in Comparative Example 4, Na₂O₂ with a high oxidation potential is disposed in the sodium supplement layer, and NaNiO₂ with a low oxidation potential is disposed in the positive electrode active material layer; the first-cycle discharge capacity of Comparative Example 4 decreased to 124.6mAh/g, down by 4.3mAh/g; the initial charge-discharge efficiency was 88.2%, down by 10%; the cycle capacity retention rate after 500 cycles was 85.7%, down by 9.7%. Among all Comparative Examples, the performance data of Comparative Example 4 showed the most significant decline. It can be seen that disposing a sodium supplement agent with a relatively high oxidation potential in the sodium supplement layer not only fails to supplement sodium but also increases the impedance of the positive electrode sheet, reducing ionic and electronic conductivity. Disposing a sodium supplement agent with a relatively low oxidation potential in the positive electrode active material layer, it is consumed during the formation stage; under the barrier effect of the sodium supplement layer, a large amount of by-products easily accumulates in the positive electrode active material layer, deteriorating the performance of the sodium-ion battery.

In Examples 1 to 4, appropriately reducing the molar ratio of the first sodium supplement agent to the second sodium supplement agent, i.e., appropriately increasing the amount of the second sodium supplement agent, is more conducive to supplementing sodium during the cycling stage, thereby improving the cycle capacity retention rate after 500 cycles of the sodium-ion battery.

In Example 1 and Examples 5 to 8, appropriately reducing the mass ratio of the second sodium supplement agent to the positive electrode active material also helps to improve the cycle capacity retention rate after 500 cycles of the sodium-ion battery. Therefore, the amount of the second sodium supplement agent needs to balance and coordinate with the amounts of the first sodium supplement agent and the positive electrode active material; both excessive and insufficient usage will lead to a decrease in the cycle capacity retention rate after 500 cycles of the sodium-ion battery.

Among all Examples, Example 9 employs an electrospinning process to fabricate the sodium supplement layer, and its electrochemical performance improvements are the most significant. The sodium-ion battery of Example 9 has a first-cycle discharge capacity of 129.5mAh/g, an initial charge-discharge efficiency of 99.3%, and a cycle capacity retention rate after 500 cycles of 96.4%. Compared with Comparative Example 1 (corresponding to 125.6mAh/g, 88.4%, and 82.5%), the discharge capacity increased by 3.9mAh/g, the initial charge-discharge efficiency increased by nearly 10%, and the capacity retention rate increased by 13.9%. It can be seen that fabricating the sodium supplement layer via the electrospinning process significantly enhances all performance metrics of the sodium-ion battery compared to the electrostatic spraying process.

For Example 1, Example 10, and Example 11, the first sodium supplement agent of Example 1 is NaNiO₂, the first sodium supplement agent of Example 10 is NaCrO₂, and the first sodium supplement agent of Example 11 is NaFeO₂. According to the molecular weights of Ni, Cr, and Fe, the sodium supplement efficiency during the formation stage ranks as NaCrO₂> NaFeO₂> NaNiO₂. Therefore, the initial charge-discharge efficiencies of Example 10 and Example 11 are both slightly higher than that of Example 1. To balance the first-cycle discharge capacity and the cycle capacity retention rate after 500 cycles, the first sodium supplement agent is preferably NaNiO₂.

Compared with Example 1, Example 12, and Comparative Example 1, the second sodium supplement agent of Example 1 is Na₂O₂, and the second sodium supplement agent of Example 12 is Na₂C₂O₄. Example 12 can also achieve improvement in sodium-ion electrochemical performance, but the enhancement effect is inferior to that of Example 1. Na₂O₂ has high sodium content, its sodium supplement efficiency is better than that of Na₂C₂O₄, and it does not generate gas during the cycling stage.

Compared with Example 1, Example 13, and Comparative Example 1, the first sodium supplement agent of Example 1 is disposed in the sodium supplement layer, and the second sodium supplement agent is disposed in the positive electrode active material layer. Both the first and second sodium supplement agents of Example 13 are in the positive electrode active material layer. The first and second sodium supplement agents of Example 13 can also significantly improve the sodium supplement effect during the formation stage, thereby increasing the initial charge-discharge efficiency and first-cycle discharge capacity, and slightly improving the capacity retention rate; however, the improvement effect is inferior to that of Example 1.

Compared with Example 1, Example 14, and Comparative Example 1, the first sodium supplement agent of Example 1 is disposed in the sodium supplement layer, and the second sodium supplement agent is disposed in the positive electrode active material layer. Both the first and second sodium supplement agents of Example 14 are in the sodium supplement layer. Example 14 can achieve effective sodium supplementation during the formation stage, significantly improving the first-cycle discharge capacity and initial charge-discharge efficiency, but its improvement in cycle capacity retention rate after 500 cycles is limited. It can be seen that disposing the first sodium supplement agent and the second sodium supplement agent in the sodium supplement layer and positive electrode active material layer respectively can effectively balance sodium supplementation during both the formation and cycling stages, thus comprehensively improving the electrochemical performance of the sodium-ion battery.

The above provides a detailed introduction to the composite sodium supplement agent, positive electrode sheet, preparation method therefor, and electricity-consumption device disclosed in the Examples of the present disclosure. Specific Examples are applied herein to illustrate the principles and implementation modes of the present disclosure. The descriptions of the above Examples are only intended to aid in understanding the composite sodium supplement agent, positive electrode sheet, preparation method therefor, and electricity-consumption device of the present disclosure, as well as its core concept. Meanwhile, for those skilled in the art, based on the concept of the present disclosure, changes may occur in specific implementation modes and application scopes. In summary, the content of this specification shall not be construed as limiting the present disclosure.

## Claims

1. A composite sodium supplement, wherein the composite sodium supplement is used for a positive electrode plate of a sodium-ion energy storage device, and the composite sodium supplement comprises: a first sodium supplement and a second sodium supplement, the first sodium supplement has a first oxidation potential, the second sodium supplement has a second oxidation potential, the first oxidation potential is less than 3.9V, and the second oxidation potential ranges from 3.9V to 4.4V.

2. The composite sodium supplement according to claim 1, wherein the first oxidation potential is less than or equal to 3.8V, and/or the second oxidation potential ranges from 3.9V to 4.1V.

3. The composite sodium supplement according to claim 1, wherein the first sodium supplement agent is selected from a group consisting of NaNiO₂, NaCrO₂, Na₂MnO₂, NaFeO₂, NaₓFe_{(1-y)}Al_{y}O₂, and NaₓFe_{(1-y)}Ti_{y}O₂, wherein 0.8≤x≤2, y≧0, and wherein the second sodium supplement agent is selected from a group consisting of Na₂O₂, Na₂O, Na₃P, Na₂C₂O₂ and Na₂C₂O₄.

4. The composite sodium supplement according to claims 1 to 3, wherein the molar ratio of the first sodium supplement to the second sodium supplement is (2-5):1.

5. A positive electrode sheet of a sodium-ion energy storage device, wherein the working voltage of the sodium-ion energy storage device ranges from 1.5V to 4.1V, and the positive electrode sheet comprises the composite sodium supplement agent according to any one of claims 1 to 4.

6. The positive electrode sheet according to claim 5, wherein the positive electrode sheet comprises a positive electrode current collector, and a positive electrode active material layer and a sodium supplement layer disposed on the positive electrode current collector, the positive electrode active material layer comprises the second sodium supplement agent, and the sodium supplement layer comprises the first sodium supplement agent.

7. The positive electrode sheet according to claim 6, wherein the sodium supplement layer further comprises a first conductive agent and a first solvent, wherein a mass ratio of the first sodium supplement agent, the first conductive agent, and the first solvent is 80:(10-15):150.

8. The positive electrode sheet according to claim 6, wherein the positive electrode active material layer further comprises a positive electrode active material, a second conductive agent and a second solvent, wherein a mass ratio of the second sodium supplement to the positive electrode active material is (1-5): 100.

9. The positive electrode sheet according to claim 5, wherein the positive electrode sheet is composed of a positive electrode current collector and a positive electrode active material layer disposed on the positive electrode current collector, and the positive electrode active material layer comprises the first sodium supplement agent and the second sodium supplement agent.

10. The positive electrode sheet according to claim 5, wherein the positive electrode sheet comprises a positive electrode current collector, and a positive electrode active material layer and a sodium supplement layer sequentially disposed on the positive electrode current collector, and the sodium supplement layer comprises the first sodium supplement agent and the second sodium supplement agent.

11. A preparation method for a positive electrode sheet according to any one of claims 5 to 10, wherein the preparation method comprises the following steps:
providing a positive electrode current collector;
coating a mixture of the second sodium supplement, a positive electrode active material, a second conductive agent and a second solvent on the positive electrode current collector and drying to obtain a positive electrode active material layer;
processing a mixture of the first sodium supplement agent, a first conductive agent, a second binder and a first solvent onto the surface of the positive electrode active material layer to obtain a sodium supplement layer.

12. The preparation method according to claim 11, wherein in the step of processing the mixture of the first sodium supplement agent, the first conductive agent and the first solvent to the positive electrode substrate to a positive electrode substrate and drying to obtain the sodium supplement layer, electrostatic spraying or electrostatic spinning is used for processing.

13. An electricity-consumption device, wherein the electricity-consumptional device comprises an electricity-consumption device body and a sodium-ion energy storage device disposed in the electricity-consumption device body, the sodium-ion energy storage device comprises the positive electrode sheet according to any one of claims 5 to 10, and the sodium-ion energy storage battery is configured to supply power to the electricity-consumption device body.
